# EUROPEAN PATENT SPECIFICATION

(11) **EP 1 859 957 B1**
(45) Date of publication and mention of the grant of the patent: **28.07.2010**
(21) Application number: 07010169.6
(22) Date of filing: 22.05.2007
(51) Int. Cl.: B60B 3/16, B60B 27/00

(54) **Rolling bearing device for wheels**
Kugellagervorrichtung für Räder
Dispositif de roulement pour roues

(30) Priority: 22.05.2006 JP 2006141121; 31.08.2006 JP 2006235610; 31.08.2006 JP 2006235613; 25.09.2006 JP 2006258649; 25.09.2006 JP 2006259346
(43) Date of publication of application: 28.11.2007
(73) Proprietor: JTEKT Corporation, Osaka-shi Osaka 542-8502 (JP)
(72) Inventor: Mori, Tasuki, Osaka-shi, Osaka 542-8502 (JP); Matsui, Shunichi, Osaka-shi, Osaka 542-8502 (JP); Yokota, Tatsuya, Osaka-shi, Osaka 542-8502 (JP); Yano, Hiroshi, Osaka-shi, Osaka 542-8502 (JP); Shitsukawa, Kenji, Osaka-shi, Osaka 542-8502 (JP); Matsuo, Yoshiomi, Osaka-shi, Osaka 542-8502 (JP)
(74) Representative: Hager, Thomas Johannes

(56) References cited:
- EP-A- 0 999 076
- EP-A- 1 566 286
- EP-A1- 1 552 964
- GB-A- 2 337 570

## Description

### BACKGROUND OF THE INVENTION

This invention relates to a rolling bearing device for a wheel, in which a hub bolt for mounting a wheel is press-fitted and fixed in a flange of a hub wheel having a hub spindle to be assembled with a-rolling bearing.

In the rolling bearing device for the wheel of this kind, when a serrated shank portion formed on the root (head) side of the hub bolt is press-fitted and fixed in a bolt hole formed in the flange of the hub wheel, burrs are formed at the opening edge of the press-fit exit of the bolt hole of the flange.
In the known prior art, therefore, the bolt hole is formed in the opening on the press-fit exit side with a counter-bore, in which burrs resulting from the press-fitting are confined (as referred to JP-A-3-157202, for example).

Here in the disclosure of JP-A-3-157202, while the flange of the hub wheel being placed and being positioned and fixed on the mounting surface of the mounting table of a press-fit apparatus, the burrs are confined in the counter-bore of the press-fit exit of the bolt hole when the serrated shank portion of the hub bolt is press-fitted in the bolt hole of the flange.

However, the abrasion powder due to the press-fit or the burr residue to come out of the burrs may be scattered to fall down from the counter-bore onto the mounting surface of the mounting table.

After this press-fit, moreover, when the hub wheel is raised and transferred onto the manufacture line of the next step, the abrasion powder or burr residue may be scattered to fall onto the manufacture line of the next step.

This raises a problem that the flange of the hub wheel to be placed on the mounting surface of the mounting table and to be positioned and fixed may be later damaged by the abrasion powder or burr residue having fallen on the mounting surface.

Moreover, the hub wheel may also be damaged by the abrasion powder or burr residue scattered to fall down on the manufacture line of the next step.

Therefore, at each step of press-fitting the shank of the hub bolt in the bolt hole of the flange, the abrasion powder or burr residue scattered to fall down on the mounting surface of the mounting table has to be removed, and this work is so troublesome as to take many works and a long time thereby to deteriorate the productivity. Moreover, the many troubles and the long time are also required for the troublesome works to eliminate the abrasion powder or burr residue scattered to fall down on the manufacturing line of the next step.

The closest prior art document GB-A-2 337 570 discloses a fastening structure comprising a bolt provided with a serration which is press-fit into a bolthole formed through the flange portion of a mounting member. This arrangement brings the drawback that the produced abrasion powder or burr residue interferes with the serrated shank portion and the annular ridge and damage the flange to be deformed.

### SUMMARY OF THE INVENTION

In view of the problems thus far described, an object of the invention is to provide a rolling bearing device for a wheel, which can prevent the abrasion powder or burr residue from being scattered to fall down onto the mounting surface of the mounting table of the press-fit apparatus when the serrated shank portion of the hub bolt is press-fitted in the bolt hole of the flange.

According to the invention the object is solved by the features of claim 1. The subclaims disclose further preferred developments of the invention.

### BRIEF DESCRIPTION OF THE DRAWINGS

Fig. 1 is a sectional side elevation showing a wheel hub unit as a rolling bearing device for a wheel according to Embodiment 1 of the invention.
Fig. 2 is a sectional view showing the state, in which a hub bolt is press-fitted in a bolt hole of a flange of a hub wheel of the same, in an enlarged scale.
Fig. 3 is an explanatory view showing a relation between the bolt hole of the flange of the same and a serrated shank portion of the hub bolt.

An embodiment of the invention will be described with reference to the accompanying drawings.

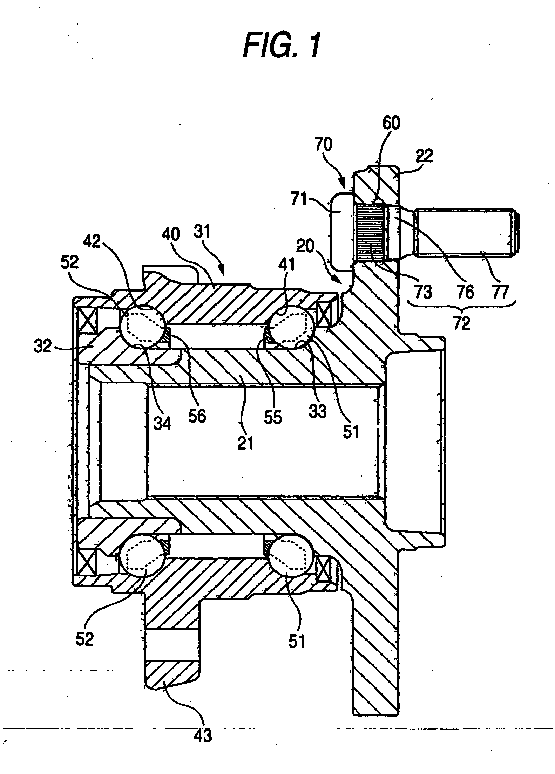

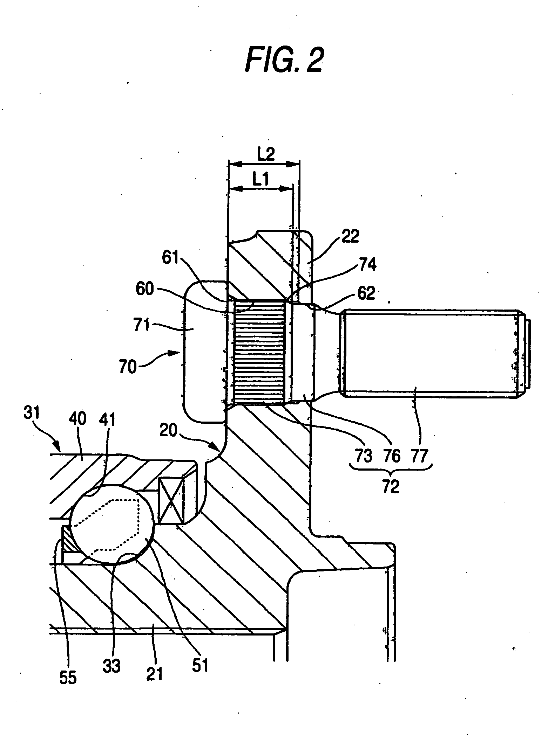

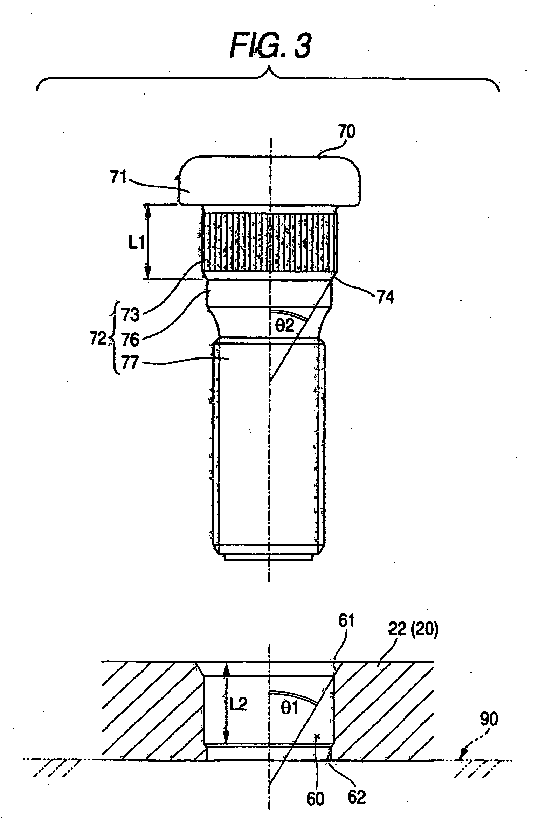

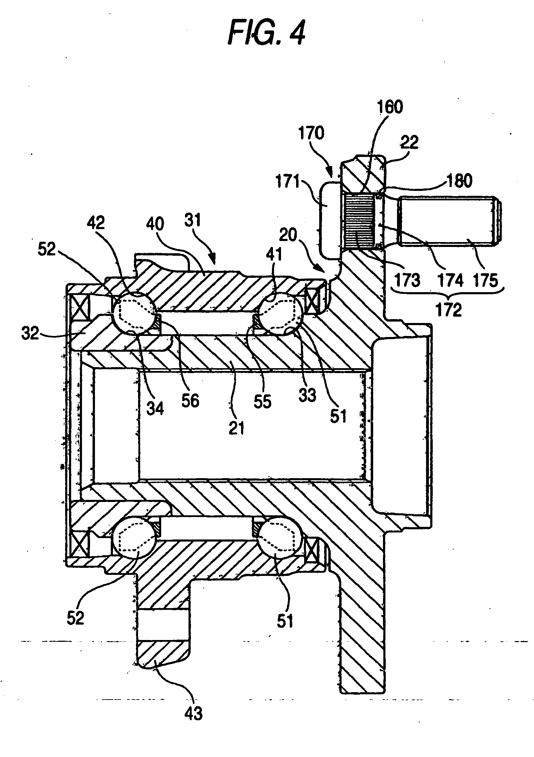

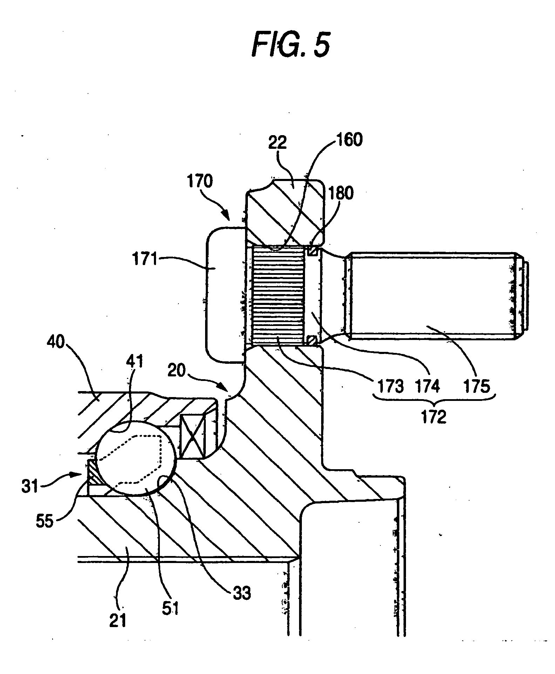

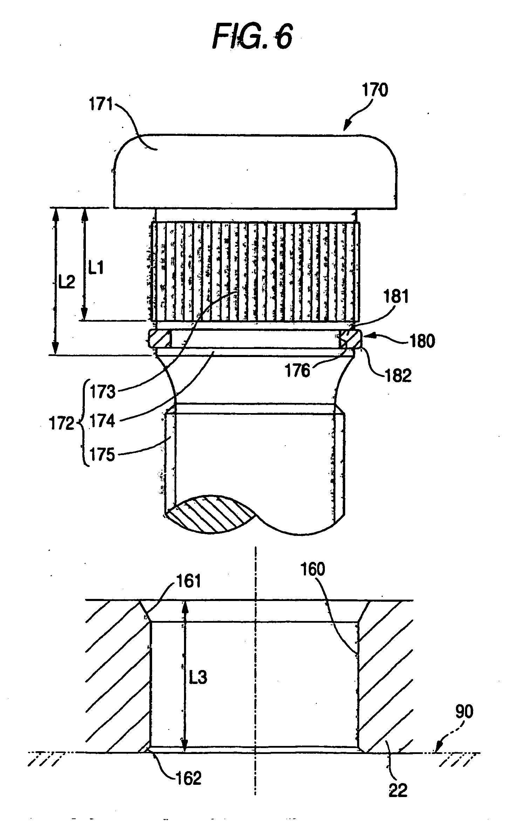

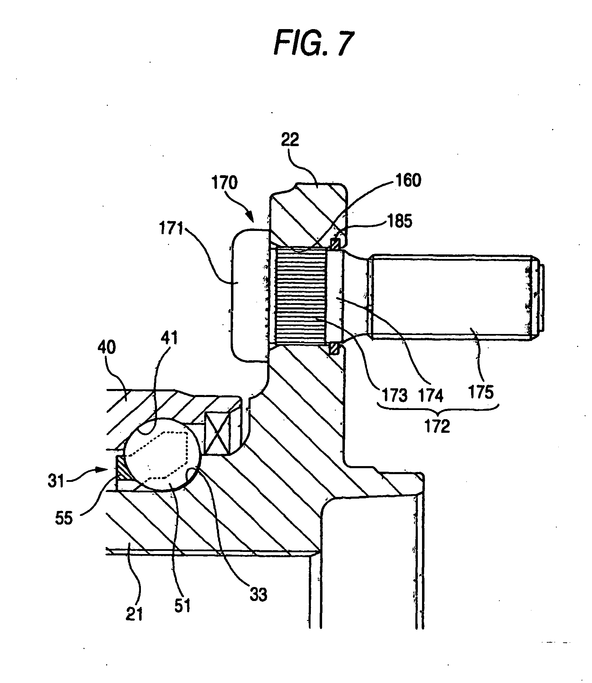

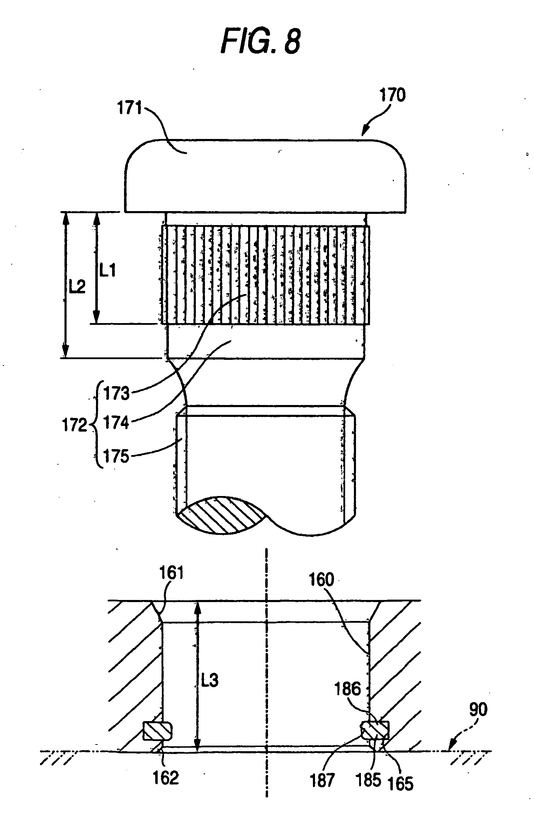

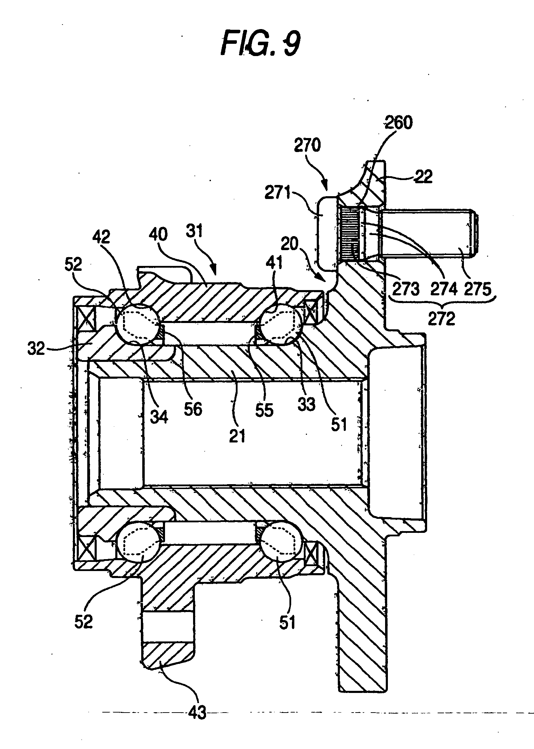

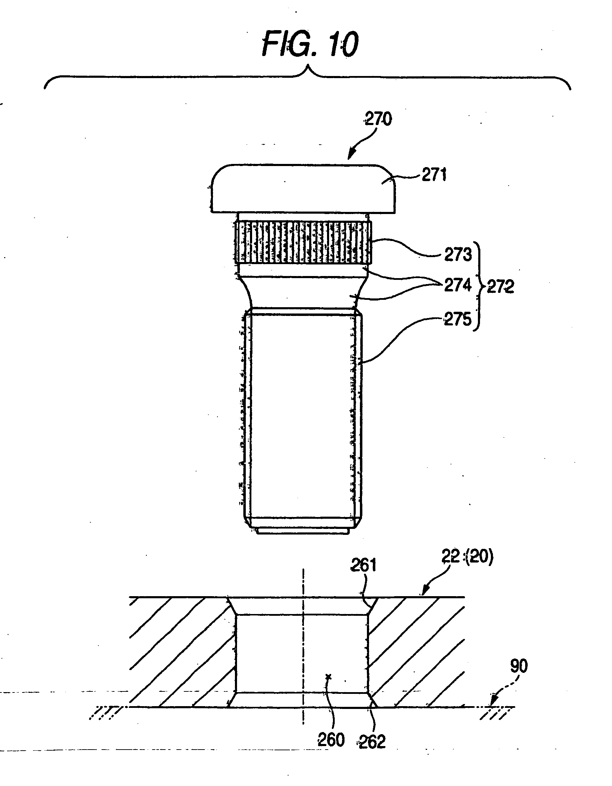

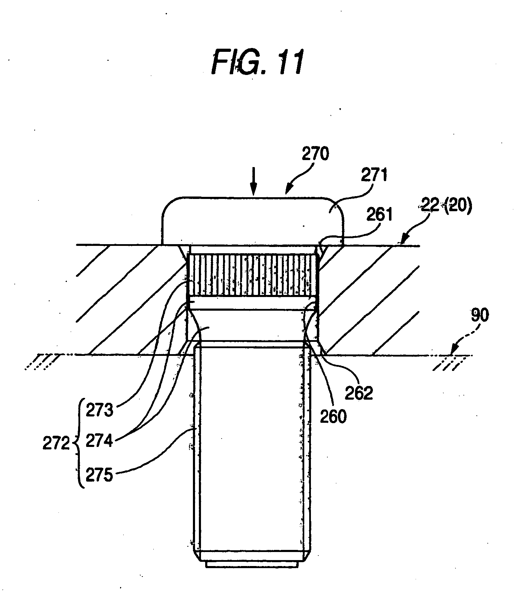

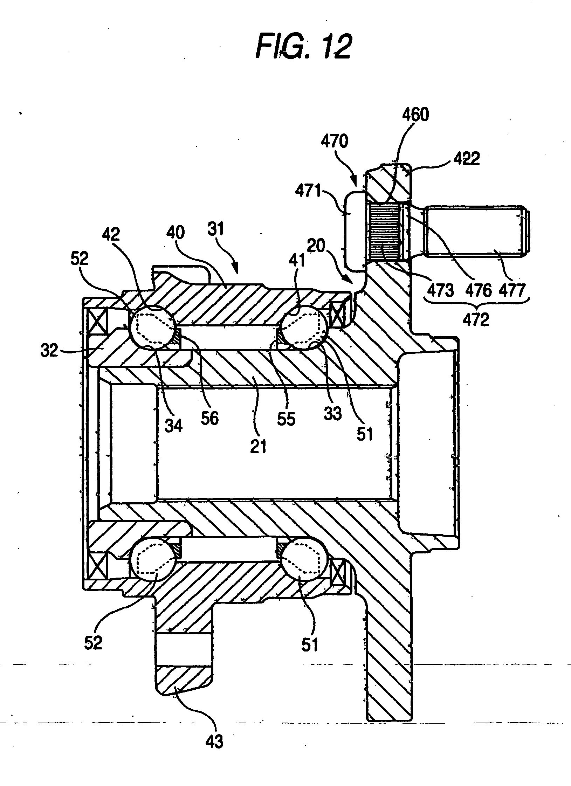

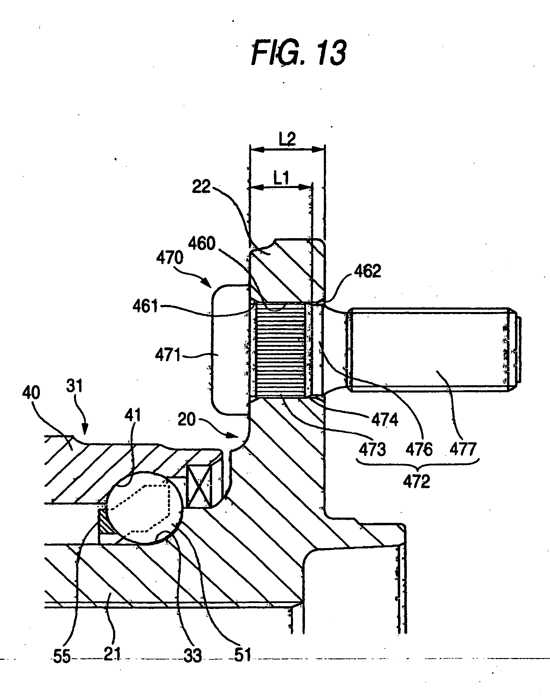

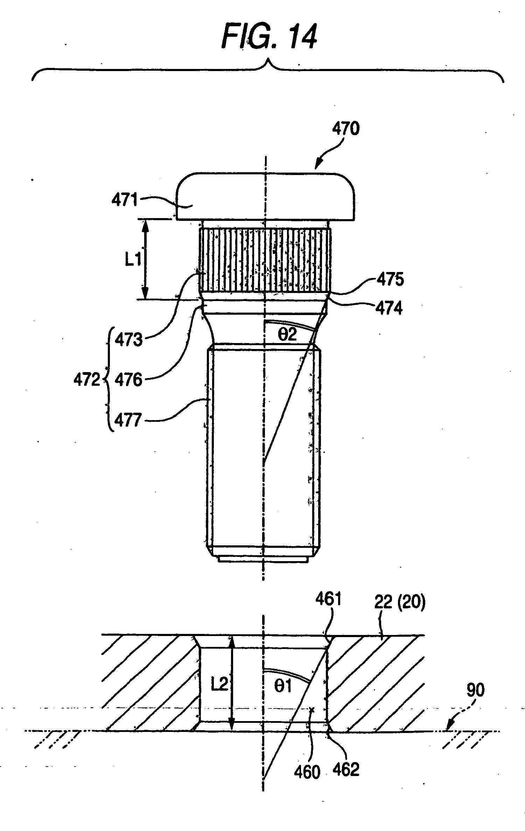

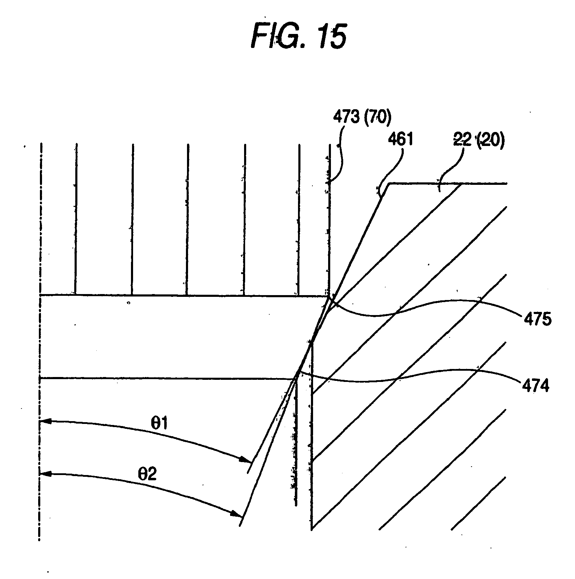

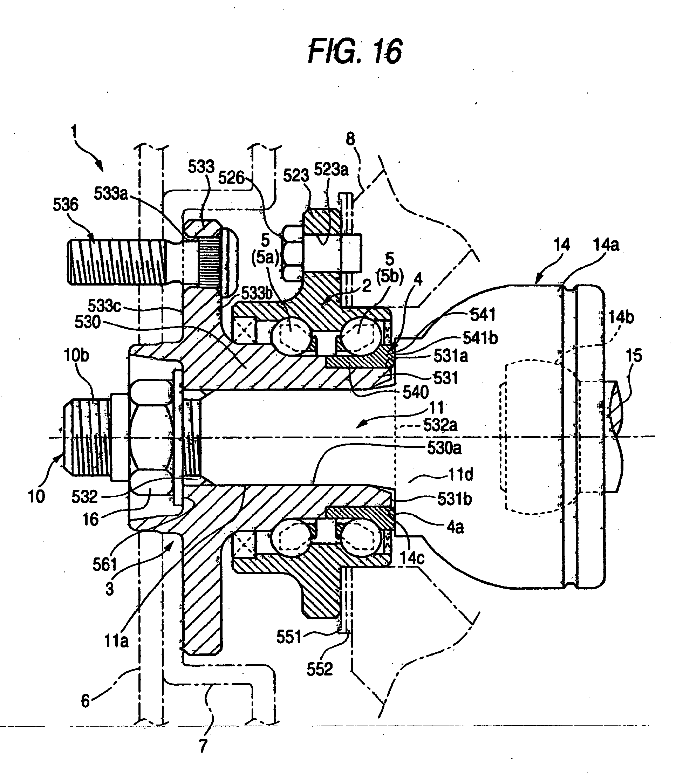

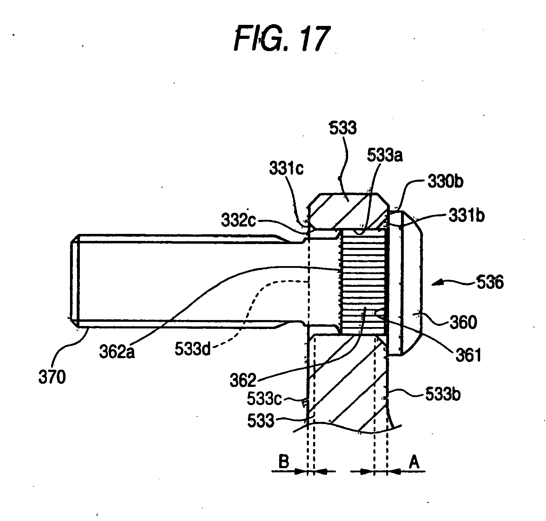

Fig. 1 is a sectional side elevation showing a wheel hub unit as a rolling bearing devise for a wheel according to Embodiment 1 of the invention. Fig. 2 is a sectional view showing the state, in which a hub bolt is press-fitted in a bolt hole of a flange of a hub wheel, in an enlarged scale. Fig. 3 is an explanatory view showing a relation between the bolt hole of the flange and the hub bolt.

As shown in Fig. 1, the wheel hub unit acting as the wheel rolling bearing device is integrated into a unit with a hub wheel 20 and a double-row angular ball bearing 31.
The hub wheel 20 is integrated with a cylindrical hub spindle 21, and a flange 22 formed on the outer circumference close to one end portion of the hub spindle 21. The double-row angular ball bearing 31 is assembled on the outer circumference of the hub spindle 21. Specifically, an outer ring 40 is arranged at a predetermined spacing from two raceway surfaces 33 and 34 disposed along the outer circumference of the hub spindle 21. A plurality of balls 51 and 52 acting as rolling elements are assembled, respectively, between two raceway surfaces 41 and 42 formed in the inner circumference of the outer ring 40 and the two raceway surfaces 33 and 34 of the hub spindle 21. These balls 51 and 52 are retained in cages 55 and 56, respectively, to constitute the angular ball bearing 31.
In Embodiment 1, as shown in Fig. 1, of the two raceway surfaces 33 and 34 formed in the outer circumference of the hub spindle 21, the raceway surface 33, as positioned on the side of the flange 22 of the hub spindle 21, is formed by grinding the outer circumference of the hub spindle 21, and the raceway surface 34 on the leading end side of the hub spindle 21 is formed in an outer circumference of an inner ring 32 press-fitted and fixed on the outer circumference close to the leading end of the hub spindle 21.

The hub wheel 20 is connected in a torque transmittable manner by spline-fitting a shaft (e.g., a drive shaft) into the bore of the hub spindle 21 and then by fastening a nut on an externally threaded portion at its shaft leading end.

A flange 43, at which the wheel hub unit is connected to a mounting face of a vehicular member such as a knuckle or carrier supported by the suspension (although not shown) of the vehicle by means of bolts is integrally formed at the axially central portion of the outer circumference of the outer ring 40.

As shown in Fig. 1 and Fig. 2, the flange 22 of the hub wheel 20 is formed at a predetermined pitch with a plurality of bolt holes 60, in which a plurality of hub bolts 70 for attaching a wheel are press-fitted and fixed.
As shown in Fig. 3, a chamfered portion 61, which has a predetermined chamfering angle (e.g., a chamfering angle of about 20 to 45 degrees) θ 1 with respect to the center axis is formed in an opening on a press-fit entrance side of the bolt hole 60 of the flange 22,
An annular ridge 62 for reducing the diameter of the bolt hole 60 and for clogging the bolt hole 60 in contact with or close to an intermediate shank portion 76 of the hub bolt 70, as will be detailed, is formed at an inner circumference of an opening on a press-fit' exit side of the bolt hole 60 of the flange 22.
Here, a boring tool, which is equipped on its outer circumference with a cutting edge corresponding to the inner circumference of the bolt hole 60 and at its leading end portion with a cutting edge corresponding to the inner circumference of the annular ridge 62, can be used to form the bolt hole 60 and the annular ridge 62 at the flange 22 at the same time.

As shown in Fig. 2 and Fig. 3, the hub bolt 70 is integrally provided with a head 71 and a shank 72. The shank 72 is formed with a serrated shank portion 73, an intermediate shank portion 76 and an externally threaded portion 77 in this order from the root portion to the leading end side of the head 71.
The external diameter of the serrated shank portion 73 is made slightly larger than the internal diameter of the bolt hole 60, and the external diameter of the intermediate shank portion 76 is made substantially equal to the internal diameter of the annular ridge 62 of the bolt hole 60. Specifically, the intermediate shank portion 76 may be either press-fitted on the annular ridge 62. or inserted with a slight clearance by a low force, and is formed to have a larger external diameter than that of the threaded portion 77. When the serrated shank portion 73 of the hub bolt 70 is press-fitted in the bolt hole 60, the annular ridge 62 of the bolt hole 60 comes either into contact with or close to the intermediate shank portion 76 thereby to clog the bolt hole 60.

In Embodiment 1, the length L1 from the lower face of the head 71 of the hub bolt 70 to the leading end of the serrated shank portion 73 is set suitably shorter than the hole length L2 from the press-fit entrance of the bolt hole 60 to the annular ridge 62.
A chamfered portion 74, which has an angle of inclination θ 2 of 30 degrees or less is formed at the press-fit side end portion of the serrated shank portion 73.

With the wheel hub unit thus constituted as the wheel rolling bearing device according to Embodiment 1, in case the hub bolt 70 is press-fitted and fixed in the flange 22 of the hub wheel 20, the flange 22 of the hub wheel 20 is placed on a mounting surface 90 of a mounting table of a press-fit apparatus, as shown in Fig. 3 and is positioned and fixed by the not-shown fixing jig.
Then, the shank 72 of the hub bolt 70 is inserted from the press-fit entrance side opening of the bolt hole 60 of the flange 22 of the hub wheel 20, and the serrated shank portion 73 of the root side of the shank 72 is press-fitted in the bolt hole 60. As a result, the hub bolt 70 is fixed in the flange 22 of the hub wheel 20.

When the serrated shank portion 73 of the hub bolt 70 is press-fitted in the bolt hole 60, the serrated shank portion 73 may bite into the bolt hole 60 thereby to scrape the inner circumference of the bolt hole 60 and to release the abrasion powder or burr residue.
On the other hand, the annular ridge 62 formed on the inner circumference of the opening on the press-fit exit side of the bolt hole 60 comes into contact with or close to the intermediate shank portion 76 of the hub bolt 70 thereby to clog the bolt hole 60. As a result, the abrasion powder or burr residue can be confined in the bolt hole 60 so that it can be prevented from being scattered to fall down on the mounting face of the mounting table of the press-fit apparatus.
Moreover, the abrasion powder or burr residue is not scattered to fall down on the manufacture line of a step next to the press-fitting step.
As a result, it is possible to prevent the damage of the flange 22, as might otherwise be caused by the abrasion powder or burr residue to be released at the press-fitting time.

In Embodiment 1, moreover, the length L1 from the lower face of the head 71 of the hub bolt 70 to the leading end of the serrated shank portion 73 is set shorter than the hole length L2 from the press-fit entrance of the bolt hole 60 to the annular ridge 62.
As shown in Fig. 2, therefore, when the serrated shank portion 73 is press-fitted in the bolt hole 60 so far as the predetermined position, in which the lower face of the head 71 of the hub bolt 70 abuts against one side face of the flange 22, the annular ridge 62 does not become an obstacle to the press-fit of the serrated shank portion 73. As a result, the serrated shank portion 73 can be reliably press-fitted so far in the bolt hole 60 as to reach the predetermined position, in which the lower face of the head 71 of the hub bolt 70 abuts against one side face of the flange 22.

Moreover, the chamfered portion 74 located at the press-fit side end portion of the serrated shank portion 73 and having the chamfering angle θ 2 of 30 degrees or less can suppress the release of the abrasion powder or burr residue due to the press-fit of the serrated shank portion 73, so that it has a high effect on the damage prevention of the flange 22 due to the abrasion powder or burr residue.

## Claims

1. A rolling bearing device for a wheel, comprising:
- a hub wheel (20) including:
- a hub spindle (21) to be assembled with a rolling bearing,
- a flange (22) formed on the hub spindle (21),
- a bolt hole (60) formed through the flange (22),
- a hub bolt (70) to be press-fitted in the bolt hole (60), wherein the hub bolt (70) includes a shank (72) formed with a serrated shank portion (73) to be press-fitted to bite the bolt hole (60), and a threaded portion (77), and
- an intermediate shank portion (76) which is arranged between the serrated shank portion (73) and the threaded portion (77),
**characterized by**
- an annular ridge (62) formed on an inner circumference of an opening on a press-fit exit side of the bolt hole (60), and
- wherein the annular ridge (62) has a diameter smaller than that of the bolt hole (60) and comes into contact or close to the intermediate shank portion (76) to clog the bolt hole (60).

2. The rolling bearing device according to claim 1, wherein a length from a lower face of a head (71) of the hub bolt (70) to the leading end of the serrated shank portion (73) is set shorter than a hole length from a press-fit entrance of the bolt hole (60) to the annular ridge (62).

3. The rolling bearing device according to claim 1 or 2, wherein a chamfered portion (74) having a chamfering angle (θ 2) of 30 degrees or less is formed between the serrated shank portion (73) and the intermediate shank portion (76).

## Patentansprüche

1. Wälzlagervorrichtung für ein Rad, umfassend
- ein Nabenrad (20), umfassend:
- eine Nabenspindel (21), die mit einem Wälzlager verbunden werden soll,
- einen Flansch (22), der auf der Nabenspindel (21) ausgebildet ist,
- ein Bolzenloch (60), das durch den Flansch (22) ausgebildet ist,
- einen Nabenbolzen (70), der mittels Presspassung in das Bolzenloch (60) eingesetzt werden soll, wobei der Nabenbolzen (70) einen Schaft (72), der mit einem gezahnten Schaftbereich (73) ausgebildet ist, um mittels Presspassung in das Bolzenloch (60) zu schneiden, und einen Gewindebereich (77) umfasst, und
- einen mittleren Schaftbereich (76), der zwischen dem gezahnten Schaftbereich (73) und dem Gewindebereich (77) angeordnet ist,
**gekennzeichnet durch**
- eine ringförmige Kante (62), die auf einem Innenumfang einer Öffnung auf einer Presspassungs-Ausgangsseite des Bolzenlochs (60) ausgebildet ist, und
- wobei die ringförmige Kante (62) einen Durchmesser aufweist, der kleiner als der des Bolzenlochs (60) ist, und mit dem mittleren Schaftbereich (76) in Kontakt gelangt oder diesem nahe kommt, um das Bolzenloch (60) zu verstopfen.

2. Wälzlagervorrichtung nach Anspruch 1, wobei eine Länge von einer Auflagefläche eines Kopfs (17) des Nabenbolzens (70) zu einem Vorderende des gezahnten Schaftbereichs (73) so festgelegt ist, dass sie kürzer als eine Lochlänge von einem Presspassungs-Eingang des Bolzenlochs (60) zur ringförmigen Kante (62) ist.

3. Wälzlagervorrichtung nach Anspruch 1 oder 2, wobei ein abgeschrägter Bereich (74) mit einem Schrägungswinkel (θ2) von 30 Grad oder weniger zwischen dem gezahnten Schaftbereich (73) und dem mittleren Schaftbereich (76) ausgebildet ist.

## Revendications

1. Dispositif de palier à roulement pour une roue, comprenant :
- un moyeu de roue (20) comportant :
- un axe de moyeu (21) destiné à être assemblé avec un palier à roulement,
- une bride (22) formée sur l'axe de moyeu (21),
- un orifice de boulon (60) formé sur la bride (22),
lequel le boulon de moyeu (70) comporte une tige (72) comportant une partie de tige dentelée (73) assemblée à force afin de mordre sur l'orifice de boulon (60), et une partie filetée (77), et
- une partie de tige intermédiaire (76) qui est agencée entre la partie de tige dentelée (73) et la partie filetée (77),
**caractérisé par**
- une strie annulaire (62) formée sur une circonférence interne d'une ouverture sur un côté de sortie d'assemblage à force de l'orifice de boulon (60), et
- dans lequel la strie annulaire (62) présente un diamètre inférieur à celui de l'orifice de boulon (60) et entre en contact ou presque avec la partie de tige intermédiaire (75) afin d'obstruer l'orifice de boulon (60).

2. Dispositif de palier à roulement selon la revendication 1, dans lequel une longueur entre une face inférieure d'une tête (71) du boulon de moyeu (70) et l'extrémité avant de la partie de tige dentelée (73) est définie à une valeur inférieure à une longueur d'orifice entre une entrée d'assemblage à force de l'orifice de boulon (60) et la strie annulaire (62).

3. Dispositif de palier à roulement selon la revendication 1 ou 2, dans lequel une partie chanfreinée (74) présentant un angle de chanfrein (θ2) de 30 degrés ou inférieur est formée entre la partie de tige dentelée (73) et la partie de tige intermédiaire (78).
